# EUROPÄISCHE PATENTSCHRIFT

(11) **EP 3 760 848 B1**
(45) Veröffentlichungstag und Bekanntmachung des Hinweises auf die Patenterteilung: **08.03.2023**
(21) Anmeldenummer: 20182086.7
(22) Anmeldetag: 24.06.2020
(51) Int. Cl.: F01P 7/16, F01P 7/08, B60K 11/02, B60L 1/00, B60W 20/00, F01P 3/20, F01P 3/12, F01P 5/10, F01P 7/14, B60K 1/00, B60K 6/22, B60L 3/00

(54) **ANORDNUNG UND VERFAHREN ZUR TEMPERIERUNG EINES VERBRENNUNGSMOTORS UND ELEKTRISCHER ANTRIEBSKOMPONENTEN EINES HYBRIDFAHRZEUGS**
ARRANGEMENT AND METHOD FOR CONTROLLING THE TEMPERATURE OF AN INTERNAL COMBUSTION ENGINE AND ELECTRIC DRIVE COMPONENTS OF A HYBRID VEHICLE
AGENCEMENT ET PROCÉDÉ DE MISE EN TEMPÉRATURE D'UN MOTEUR À COMBUSTION INTERNE ET COMPOSANTS D'ENTRAÎNEMENT ÉLECTRIQUE D'UN VÉHICULE HYBRIDE

(30) Priorität: 05.07.2019 DE 102019209907; 05.07.2019 DE 102019209942
(43) Veröffentlichungstag der Anmeldung: 06.01.2021
(73) Patentinhaber: Ford Global Technologies, LLC, Dearborn, MI 48126 (US)
(72) Erfinder: Quix, Hans Günther, 52134 Herzogenrath (DE); Mehring, Jan, 50668 Köln (DE); Emig, Tobias, 45894 Gelsenkirchen (DE); Gussen, Uwe, 52393 Hürtgenwald (DE); van Bebber, David, 52064 Aachen (DE)
(74) Vertreter: Markowitz, Markus

(56) Entgegenhaltungen:
- EP-A2- 1 669 570
- WO-A1-02/079621
- WO-A1-2016/208550
- US-A1- 2011 073 285

## Beschreibung

Die vorliegende Erfindung betrifft eine Anordnung und ein Verfahren zur Temperierung eines Verbrennungsmotors und elektrischer Antriebskomponenten eines Hybridfahrzeugs, eine Steuereinheit sowie ein Hybridfahrzeug.

Hybridelektrofahrzeuge verfügen typischerweise über zwei voneinander getrennte Kühlkreisläufe zur Kühlung des Verbrennungsmotors einerseits und zur Kühlung von Komponenten des elektrischen Antriebs andererseits (US 7 377 237 B2). Ein solch typisches Kühlsystem ist in Fig. 1 dargestellt.

Aus der WO 2016/208550 A1 ist ein Kühlsystem mit getrennten Kühlkreisläufen für den Verbrennungsmotor einerseits und elektrische Komponenten andererseits bekannt. Über einen Wärmetauscher kann Wärme zwischen beiden Kühlkreisläufen übertragen werden.

Nachteilig an diesen Konfigurationen ist, dass neben dem Kühlkreislauf zur Kühlung des Verbrennungsmotors ein weiterer Kühlkreislauf mit einer üblicherweise elektrisch betriebenen Pumpeinrichtung nur für die elektrischen Komponenten benötigt wird. Diese elektrisch betriebene Pumpeinrichtung muss auch dann eingeschaltet sein, wenn der Verbrennungsmotor aktiv ist und eine Kühlung der elektrischen Komponenten benötigt wird. Hierbei wird elektrische Energie verbraucht, was sich negativ auf die Gesamtenergiebilanz auswirkt und beispielsweise die Reichweite des Hybridelektrofahrzeugs verringern kann.

Aus der JP 2013 - 124 049 A sowie der US 2011/073285 A1 sind gemeinsame Kühlsysteme zur Kühlung des Verbrennungsmotors und der elektrischen Komponenten bekannt, deren Funktionsweise auf einer speziellen konstruktiven Gestaltung des Kühlers beruht. Die beschriebenen Konzepte sind in der Praxis daher nur aufwändig umsetzbar.

Die DE 10 2012 217 101 A1 offenbart einen Kühlmittelkreislauf für ein Fahrzeug, bei dem zwei oder mehr Kühlmittelkreisläufe in einem einzigen Kühlmittelkreislauf integriert sind und möglichst viele oder alle Komponenten des integrierten Kühlmittelkreislaufs aus in Teillast- oder Teilbetriebszuständen mit Kühlmittel durchströmt werden. Hierzu wird eine in einem höheren Temperaturbereich wärmeabgebende Komponente in Strömungsrichtung des Kühlmittels betrachtet nach einer in einem niedrigen Temperaturbereich wärmeabgebende Komponente angeordnet. Dadurch ergibt sich ein komplexer Aufbau des Kühlmittelkreislaufs.

Aus der JP H11- 22 460 A ist ein Kühlsystem für ein Elektrohybridfahrzeug bekannt, bei dem der Verbrennungsmotor und der Elektromotor mit separaten Kühlkreisläufen mit jeweils einer Kühleinrichtung gekühlt werden. Beide Kühlkreisläufe sind jedoch miteinander verbunden, um einen Wärmetransfer zu ermöglichen und die Temperatur effizienter regeln zu können.

Die WO 02/079621 A1 offenbart eine Kühlanordnung, in der der Verbrennungsmotor und elektrische Komponenten parallel zueinander angeordnet sind, wobei in jedem Parallelabschnitt jeweils eine Pumpeinrichtung vorhanden ist.

Aus der EP 1 669 570 A2 ist eine Kühlanordnung mit zwei Pumpeinrichtungen bekannt, wobei eine Pumpeinrichtung unmittelbar stromaufwärts des zu temperierenden Verbrennungsmotors und eine weitere Pumpeinrichtung unmittelbar stromaufwärts des zu temperierenden Elektromotors angeordnet ist.

Die DE 100 28 280 A1 beschreibt eine Pump- und Heizvorrichtung, die eine Hilfspumpe und ein steuer- oder regulierbares Drosselventil einschließt. Die Pump- und Heizvorrichtung kann in einem Kühlmittelkreislauf zum Kühlen eines Motors genutzt werden.

Weitere Temperieranordnungen für Kraftfahrzeuge sind aus der DE 10 2007 062 346 A1 und der US 2 543 443 A bekannt.

Aufgabe der vorliegenden Erfindung ist es, Möglichkeiten zur verbesserten Temperierung eines Verbrennungsmotors und elektrischer Antriebskomponenten eines Hybridfahrzeugs anzugeben.

Gelöst wird diese Aufgabe durch die Gegenstände der unabhängigen Ansprüche. Vorteilhafte Weiterbildungen der Erfindung sind in den Unteransprüchen angegeben.

Eine erfindungsgemäße Anordnung zur Temperierung eines Verbrennungsmotors und elektrischer Antriebskomponenten eines Hybridfahrzeugs verfügt über einen Temperierkreislauf. Der Temperierkreislauf weist einen Hauptabschnitt, eine im Hauptabschnitt angeordnete Hauptpumpeinrichtung, einen ersten Parallelabschnitt mit einem Verbrennungsmotor, einen zweiten Parallelabschnitt mit elektrischen Antriebskomponenten und einer Hilfspumpeinrichtung und einen Kühler zur Kühlung des Verbrennungsmotors und der elektrischen Antriebskomponenten auf.

Erster bzw. zweiter Parallelabschnitt bedeutet, dass diese Abschnitte parallel zueinander, bezogen auf eine Strömung eines Temperiermittels im Temperierkreislauf, angeordnet sind.

Unter einem Verbrennungsmotor, teilweise auch als Brennkraftmaschine bezeichnet, ist eine Verbrennungskraftmaschine zur Umwandlung von im Kraftstoff enthaltener chemischer Energie in mechanische Arbeit zu verstehen. Der Verbrennungsmotor kann beispielsweise als selbstzündender oder fremdgezündeter Verbrennungsmotor ausgebildet sein. Als Kraftstoff kann beispielsweise Motorbenzin oder Diesel genutzt werden.

Unter elektrischen Antriebskomponenten sind diejenigen Bauteile zu verstehen, die dem elektrischen Antrieb des Hybridfahrzeugs, bei dem es sich folglich um ein Hybridelektrofahrzeug handelt, dienen. Dazu zählen beispielsweise ein Wechselrichter (Inverter) sowie eine Elektromaschine, die als Elektromotor und optional auch als Generator arbeiten kann.

Sowohl der Verbrennungsmotor als auch eine oder mehrere der elektrischen Antriebskomponenten bedürfen unter üblichen Betriebsbedingungen einer Kühlung, um ein Überhitzen und ggf. eine Beschädigung der Bauteile zu vermeiden. Hierfür wird ein Temperierkreislauf genutzt, in dem ein Temperiermittel, z. B. Wasser, strömen kann, Wärme von den zu kühlenden Komponenten aufnimmt und an anderer Stelle im Temperierkreislauf, z. B. im Kühler, wieder abgibt. Der Temperierkreislauf wird dazu durch Schläuche, Rohre, Leitungen etc. gebildet, die die verschiedenen Einrichtungen des Temperierkreislaufs, also z. B. Verbrennungsmotor, elektrische Antriebskomponenten, Kühler, Pumpeinrichtungen, miteinander verbindet, so dass diese von dem Temperiermittel durchströmt oder umströmt werden können und eine Wärmeübertragung vom bzw. auf das Temperiermittel stattfinden kann..

Neben der Kühlung kann der Temperierkreislauf, ggf. mit modifiziertem Aufbau, unter bestimmten Betriebsbedingungen, z. B. nach einem Kaltstart oder bei sehr geringen Umgebungstemperaturen, auch zum Erwärmen des Verbrennungsmotors und/oder der elektrischen Antriebskomponenten genutzt werden.

Der Temperierkreislauf weist einen Kühler auf, der der Kühlung des erwärmten Temperiermittels dient. Der Kühler kann beispielsweise als Temperiermittel-Luft-Wärmeüberträger ausgebildet sein, so dass Wärme vom Temperiermittel an die Umgebungsluft übertragen werden kann.

Der Kühler kann beispielsweise im Hauptabschnitt angeordnet sein. Dies bedeutet, dass eine Verzweigungsstelle zur Vereinigung von den ersten Parallelabschnitt und den zweiten Parallelabschnitt durchströmenden Temperiermittelteilströmen stromaufwärts des Kühlers angeordnet ist. Angegebene Strömungsrichtungen beziehen sich auf die Strömung eines Temperiermittels im Temperierkreislauf.

Als Hauptabschnitt wird vorliegend ein Abschnitt des Temperierkreislaufs bezeichnet, bei dem es sich weder um den ersten noch um den zweiten Parallelabschnitt handelt. Der Hauptabschnitt kann zwischen den Parallelabschnitten angeordnet sein und sich von einer Verzweigungsstelle, an der eine Verzweigung des Temperierkreislaufs auf den ersten Parallelabschnitt und den zweiten Parallelabschnitt erfolgt, bis zu einer Verzweigungsstelle zur Vereinigung von den ersten Parallelabschnitt und den zweiten Parallelabschnitt durchströmenden Temperiermittelteilströmen erstrecken, so dass ein durch einen oder beide Parallelabschnitte strömendes Temperiermittel anschließend bzw. zuvor den Hauptabschnitt zumindest teilweise durchströmt.

Im ersten Parallelabschnitt ist der Verbrennungsmotor angeordnet, im zweiten Parallelabschnitt sind ein oder mehrere elektrische Antriebskomponenten angeordnet. Folglich kann das Temperiermittel entweder nur den Verbrennungsmotor, nur die elektrischen Antriebskomponenten oder sowohl den Verbrennungsmotor als auch die elektrischen Antriebskomponenten durch- oder umströmen. Für die Auswahl der Abschnitte, die durchströmt werden, können an den Verzweigungspunkten bzw. Verzweigungsstellen des Temperierkreislaufs entsprechende Durchflusssteuereinrichtungen vorgesehen sein.

Im zweiten Parallelabschnitt ist neben den elektrischen Antriebskomponenten eine Hilfspumpeinrichtung angeordnet. Bevorzugt kann die Hilfspumpeinrichtung stromaufwärts der Antriebskomponenten angeordnet sein.

Die Hauptpumpeinrichtung ist im Hauptabschnitt angeordnet, bevorzugt unmittelbar stromaufwärts einer Verzweigungsstelle, an der eine Verzweigung des Temperierkreislaufs auf den ersten Parallelabschnitt und den zweiten Parallelabschnitt erfolgt.

Die vorgeschlagene Anordnung ermöglicht vorteilhaft eine Temperierung, insbesondere Kühlung, des Verbrennungsmotors sowie der elektrischen Antriebskomponenten in einem gemeinsamen Temperierkreislauf unter Nutzung eines gemeinsamen Kühlers. Der bei getrennten Temperierkreisläufen notwendige zweite Kühler kann vorteilhaft entfallen, so dass sowohl Kosten als auch Bauraum eingespart werden können. In einer Ausführungsvariante weist der Temperierkreislauf daher genau einen Kühler auf.

Weiterhin ermöglicht die Anordnung eine energiesparende Ausbildung eines Temperiermittelstroms und damit eine Temperierung des Verbrennungsmotors bzw. der elektrischen Antriebskomponenten, da hierfür jeweils nur eine der beiden Pumpeinrichtungen aktiv sein muss. Ist beispielsweise eine Temperierung des Verbrennungsmotors oder des Verbrennungsmotors und der elektrischen Antriebskomponenten erforderlich, wird ein Temperiermittelstrom im Temperierkreislauf mittels der Hauptpumpeinrichtung ausgebildet. Ist hingegen lediglich eine Temperierung der elektrischen Antriebskomponenten erforderlich, da sich z. B. der Verbrennungsmotor in einem ausgeschalteten Betriebszustand befindet, kann ein Temperiermittelstrom mittels der Hilfspumpeinrichtung ausgebildet werden. Ein gleichzeitiger Betrieb beider Pumpeinrichtungen ist also nicht notwendig, wodurch Energie eingespart werden kann. Die Funktionsweise des Temperierkreislaufs, aus der sich Vorteile der Anordnung ergeben, wird untenstehend näher erläutert.

Gemäß verschiedenen Ausführungsvarianten kann die Hauptpumpeinrichtung mittels des Verbrennungsmotors betreibbar sein.

Beispielsweise kann die Hauptpumpeinrichtung mechanisch durch den Verbrennungsmotor angetrieben werden, z. B. durch Integration der Hauptpumpeinrichtung in einen Zahnriemen- oder Keilrippenriementrieb.

Vorteilhaft kann dadurch der Betrieb der Hauptpumpeinrichtung automatisch an den Betriebszustand des Verbrennungsmotors gekoppelt werden. Dies bedeutet, dass die Hauptpumpeinrichtung nur im angeschalteten Betriebszustand aktiv ist und im ausgeschalteten Betriebszustand des Verbrennungsmotors inaktiv ist.

Außerdem besteht die Möglichkeit, die Drehzahl der Hauptpumpeinrichtung an die Motordrehzahl zu koppeln, so dass bei hoher Motordrehzahl, die üblicherweise auch mit einem hohen Kühlbedarf einhergeht, aufgrund der ebenfalls höheren Drehzahl der Hauptpumpeinrichtung eine entsprechende höhere Kühlleistung zur Verfügung steht. Eine zusätzliche Steuereinheit wird nicht benötigt.

Gemäß weiteren Ausführungsvarianten kann die Hilfspumpeinrichtung elektrisch betreibbar sein.

Beispielsweise kann elektrische Energie von einer wiederaufladbaren Batterie, z. B. der Traktionsbatterie des Hybridfahrzeugs, zur Verfügung gestellt werden. Die Aktivierung bzw. Deaktivierung der Hilfspumpeinrichtung lässt sich einfach mit dem Betriebszustand der elektrischen Antriebskomponenten koppeln. Wenn diese aktiv sind, besteht üblicherweise Kühlbedarf und neben der Energieentnahme für den elektrischen Antrieb des Hybridfahrzeugs kann gleichzeitig elektrische Energie für den Betrieb der Hilfspumpeinrichtung entnommen werden.

Befindet sich der elektrische Antrieb in einem Rekuperationsmodus, kann außerdem die generierte elektrische Energie direkt für den Betrieb der Hilfspumpeinrichtung genutzt werden, ohne dass es einer mit Energie-verlusten verbundenen Zwischenspeicherung der elektrischen Energie bedarf.

Durch das elektrische Betreiben der Pumpeinrichtung können die Pumpleistung der Hilfspumpeinrichtung und die damit verbundene Temperier- bzw. Kühlleistung zudem einfach variiert und an den Temperier- bzw. Kühlbedarf angepasst werden. Außerdem kann der Wirkungsgrad einer elektrisch betriebenen Pumpeinrichtung im Vergleich zu einer mechanisch betriebenen Pumpeinrichtung höher sein.

Gemäß weiteren Ausführungsvarianten handelt es sich bei den elektrischen Antriebskomponenten um einen Wechselrichter und/oder eine Elektromaschine.

Eine oder mehrere dieser Komponenten können zur Temperierung im zweiten Parallelabschnitt angeordnet sein. Der Betrieb dieser Komponenten kann mit einer Erwärmung verbunden sein, die eine Kühlung erforderlich macht. Durch Anordnung dieser Komponenten im Temperierkreislauf können diese temperiert, insbesondere gekühlt werden. Einer Beschädigung durch Überhitzen kann dadurch vorgebeugt werden.

Gemäß weiteren Ausführungsvarianten kann die Anordnung einen parallel zum Kühler angeordneten Wärmeüberträger, ausgebildet zur Wärmeübertragung zwischen einem im Temperierkreislauf strömenden Temperiermittel und in einen Innenraum des Hybridfahrzeugs einleitbarer Luft und/oder einen parallel zum Kühler angeordneten Bypass aufweisen. Ist dies der Fall, so weist die Anordnung außerdem eine Durchflusssteuereinrichtung, ausgebildet zur Aufteilung eines Temperiermittelstroms im Temperierkreislauf auf den Kühler sowie den Wärmeüberträger und/oder den Bypass, auf.

Der Wärmeüberträger dient vordergründig der Erwärmung der Luft im Innenraum des Hybridfahrzeugs, indem Wärme von dem Temperiermittel auf die Luft übertragen wird. Damit einher geht eine Kühlung des Temperiermittels, so dass das gekühlte Temperiermittel Wärme vom Verbrennungsmotor und/oder den elektrischen Antriebskomponenten aufnehmen kann.

Vorteilhaft wird also die vom Verbrennungsmotor und/oder den elektrischen Antriebskomponenten nicht einfach an die Umgebung abgegeben, sondern zur Erwärmung der Innenraumluft genutzt. Die Energiebilanz kann dadurch verbessert werden. Außerdem lässt sich durch Kombination von Kühlung mittels des Kühlers und Wärmeübertragung mittels des Wärmeüberträgers eine höhere Kühlleistung erreichen, so dass auch bei starker Erwärmung des Verbrennungsmotors bzw. der elektrischen Antriebskomponenten eine ausreichende Kühlung erfolgen kann bzw. der Kühler entsprechend kleiner dimensioniert werden kann.

Der Bypass dient der Umgehung des Kühlers, so dass auf einfache Art und Weise eine Mischtemperatur eingestellt werden kann, die sich durch Mischung des durch den Bypass strömenden Temperiermittels und des durch den Kühler strömenden Temperiermittels ergibt. Die Temperiermitteltemperatur kann vorteilhaft genau eingestellt werden, indem die entsprechenden Durchflussmengen mittels der Durchflusssteuereinrichtung, die z. B. als 3-Wege-Ventil ausgebildet sein kann, eingestellt werden.

Die Durchflusssteuereinrichtung kann beispielsweise als Thermostatventil ausgebildet sein. Dadurch kann vorteilhaft der Durchfluss durch den Kühler, den Bypass bzw. den Wärmeüberträger in Abhängigkeit der Temperatur des Temperiermittels gesteuert werden.

Gemäß weiteren Ausführungsvarianten kann eine Verzweigungsstelle zur Vereinigung von den ersten Parallelabschnitt und den zweiten Parallelabschnitt durchströmenden Temperiermittelteilströmen stromaufwärts der Durchflusssteuereinrichtung angeordnet sein.

Dadurch kann die Temperatur des den zweiten Parallelabschnitt durchströmenden Temperiermittels bei der Aufteilung des Temperiermittelstroms mittels der Durchflusssteuereinrichtung mit berücksichtigt werden. Im Vergleich zu einer Ausführungsvariante, bei der die Verzweigungsstelle unmittelbar stromaufwärts des Kühlers angeordnet ist, kann dadurch vorteilhaft ein zu starker Abfall der Temperiermitteltemperatur, z. B. in längeren Leerlaufbetriebsphasen des Verbrennungsmotors, vermieden werden.

Gemäß weiteren Ausführungsvarianten kann eine Verzweigungsstelle zur Vereinigung von den ersten Parallelabschnitt und den zweiten Parallelabschnitt durchströmenden Temperiermittelteilströmen stromabwärts des Kühlers, beispielsweise unmittelbar stromabwärts des Kühlers, angeordnet sein.

Bei dieser Ausführungsvariante ist der Kühler folglich im ersten Parallelabschnitt angeordnet. Auch bei dieser Ausführungsvariante kann im Vergleich zu einer Ausführungsvariante, bei der die Verzweigungsstelle unmittelbar stromaufwärts des Kühlers angeordnet ist, ein zu starker Abfall der Temperiermitteltemperatur, z. B. in längeren Leerlaufbetriebsphasen des Verbrennungsmotors, vermieden werden.

Ist die Verzweigungsstelle zur Vereinigung von den ersten Parallelabschnitt und den zweiten Parallelabschnitt durchströmenden Temperiermittelteilströmen stromabwärts des Kühlers angeordnet, so kann gegenüber einer Ausführungsvariante, bei der die Verzweigungsstelle stromaufwärts der Durchflusssteuereinrichtung angeordnet ist, eine höhere Druckdifferenz erzielt werden. Dadurch können höhere Durchflussraten bzw. Durchflussmengen im zweiten Parallelabschnitt erreicht werden. Jedoch wird das den zweiten Parallelabschnitt durchströmende Temperiermittel nicht mehr direkt dem Kühler zugeführt, so dass insgesamt nur eine geringere Wärmeabgabe realisiert werden kann. In Abhängigkeit der konkreten Anforderungen und Randbedingungen können daher die Vorteile bei einer Anordnung der Verzweigungsstelle stromaufwärts der Durchflusssteuereinrichtung oder stromabwärts des Kühlers überwiegen.

Gemäß weiteren Ausführungsvarianten kann die Anordnung eine im zweiten Parallelabschnitt angeordnete Drosseleinrichtung aufweisen.

Die Drosseleinrichtung kann bevorzugt stromaufwärts der Hilfspumpeinrichtung angeordnet sein. Es ist jedoch auch eine andere Position im zweiten Parallelabschnitt oder auch eine Kombination mit anderen Komponenten im zweiten Parallelabschnitt möglich.

Mittels der Drosseleinrichtung kann die Durchflussmenge des Temperiermittels im zweiten Parallelabschnitt festgelegt werden. Beispielsweise kann die Durchflussmenge im Vergleich zum ersten Parallelabschnitt verringert sein oder werden, falls der Temperierkreislauf mittels der Hauptpumpeinrichtung aktiviert ist und folglich auch der Verbrennungsmotor gekühlt wird, da die elektrischen Antriebskomponenten im Vergleich zum Verbrennungsmotor üblicherweise einer geringeren Kühlung bedürfen.

Ist hingegen der Druckverlust in den Leitungen und Komponenten des zweiten Parallelabschnitts ausreichend hoch, kann auf eine separate Drosseleinrichtung verzichtet werden. Beispielsweise kann die nicht aktive Hilfspumpeinrichtung als Drossel fungieren, da sie einen Strömungswiderstand darstellt. Folglich kann eine separate Drosseleinrichtung entbehrlich sein und die mit einer separaten Drosseleinrichtung verbundenen Kosten und der entsprechende Bauraum können eingespart werden.

In einer Ausgestaltung kann die Drosselwirkung der Hilfspumpeinrichtung einstellbar sein, so dass die Durchflussmenge durch den zweiten Parallelabschnitt durch Variation der Drosselwirkung eingestellt werden kann. Durch Einstellung der Durchflussmenge lässt sich die Kühlleistung einstellen.

Gemäß weiteren Ausführungsvarianten kann die Anordnung ein im zweiten Parallelabschnitt angeordnetes Ventil aufweisen, welches dazu ausgebildet ist, eine Durchflussmenge des Temperiermittelteilstroms im zweiten Parallelabschnitt zu steuern.

Insbesondere kann das Ventil dazu ausgebildet sein, eine Durchflussmenge des Temperiermittelteilstroms im zweiten Parallelabschnitt auf einen maximalen Wert zu begrenzen und somit bei entsprechend hohem anliegenden Temperiermitteldruck konstant zu halten. Mit anderen Worten kann das Ventil dazu dienen, Durchflussschwankungen auszugleichen und die Durchflussmenge auf einen maximalen Wert zu begrenzen.

Eine begrenzbare bzw. konstanthaltbare Durchflussmenge im zweiten Parallelabschnitt hat den Vorteil, dass die Hauptpumpeinrichtung kleiner dimensioniert werden kann. Zudem kann eine gleichmäßige Temperierung der elektrischen Antriebskomponenten erreicht werden.

Eine begrenzbare bzw. konstanthaltbare Durchflussmenge im zweiten Parallelabschnitt ist insbesondere von Vorteil, falls die Hauptpumpeinrichtung mittels des Verbrennungsmotors angetrieben wird, da in diesem Fall ohne Ventil im zweiten Parallelabschnitt eine zunehmende Drehzahl des Verbrennungsmotors auch zu einer höheren Durchflussmenge im zweiten Parallelabschnitt führen würde. Um auch bei höheren Drehzahlen einen ausreichenden Temperiermittelstrom im ersten Parallelabschnitt und damit eine ausreichende Temperierung des Verbrennungsmotors sicherstellen zu können, müsste die Hauptpumpeinrichtung ohne Ventil im zweiten Parallelabschnitt nämlich grö-ßer dimensioniert werden.

Zudem kann eine zu hohe Durchflussmenge im zweiten Parallelabschnitt mit einer unerwünschten verstärkten Temperierung der elektrischen Antriebskomponenten einhergehen, die folglich durch das Ventil im zweiten Parallelabschnitt vermieden werden kann.

Gemäß verschiedenen Ausführungsvarianten kann das Ventil ausgebildet sein als druckgeregeltes Ventil, als von einer Ventilsteuereinheit gesteuertes Elektromagnetventil oder als selbstregulierendes Durchflussregelventil.

Druckgeregeltes Ventil bedeutet, dass das Ventil mittels eines Drucks, der über eine Hilfsdruckleitung aufgebracht wird, geregelt wird. Die Hilfsdruckleitung ist mit dem Anfang des zweiten Parallelabschnitts verbunden, d. h. sie zweigt stromaufwärts aller im zweiten Parallelabschnitt angeordneten Komponenten vom zweiten Parallelabschnitt ab. Das Druckregelventil ist vorzugsweise am Ende des zweiten Parallelabschnitts angeordnet, d. h. stromabwärts aller im zweiten Parallelabschnitt angeordneten Komponenten.

Herrscht in der Hilfsdruckleitung ein hoher Druck, so verringert das Druckregelventil den Querschnitt des zweiten Parallelabschnitts (es schließt), so dass die Durchflussmenge reduziert wird. Herrscht in der Hilfsdruckleitung hingegen ein niedriger Druck, so erhöht das Druckregelventil den Querschnitt des zweiten Parallelabschnitts (es öffnet), so dass die Durchflussmenge erhöht wird. Das druckgeregelte Ventil zeichnet sich durch eine schnelle Reaktionszeit aus, da seine Ventilposition direkt vom durch die Hauptpumpeinrichtung erzeugten und in der Hilfsdruckleitung herrschenden Druck abhängig ist. Dadurch wird eine automatische Verstellung des Ventils in Abhängigkeit vom Temperiermittelmitteldurchsatz (und Druck nach der Hauptpumpeinrichtung) erreicht. Der Temperiermittelstrom im zweiten Parallelabschnitt kann so bei entsprechender Auslegung des Ventils mehr oder weniger konstant gehalten werden. Weitere Steuer- und Regeleinrichtungen werden vorteilhaft nicht benötigt.

Von einer Ventilsteuereinheit gesteuertes Elektromagnetventil bedeutet, dass die Ventilposition mittels eines von der Ventilsteuereinheit erzeugten Steuersignals vorgegeben wird. Die Ventilsteuereinheit kann Teil einer Motorsteuereinheit sein oder in diese integriert sein. In einer typischen Ausgestaltung fungiert die Motorsteuereinheit des Hybridfahrzeugs als Ventilsteuereinheit. Je nach Steuersignal öffnet bzw. schließt das Ventil, so dass die Durchflussmenge im zweiten Parallelabschnitt erhöht bzw. verringert wird. Vorteilhaft an dieser Ventillösung ist deren Unabhängigkeit vom im zweiten Parallelabschnitt herrschenden Druck, da das Steuersignal und somit die Ventilposition je nach Bedarf festgelegt werden können. Beispielsweise besteht die Möglichkeit, dass neben dem Druck weitere Parameter, z. B. Temperatur, zur Festlegung der Ventilposition genutzt werden. Ein von einer Ventilsteuereinheit gesteuertes Elektromagnetventil kann stromaufwärts oder stromabwärts der elektrischen Antriebskomponenten im zweiten Parallelabschnitt angeordnet sein. Dies erhöht vorteilhaft den Spielraum bei der Nutzung des vorhandenen Bauraums.

Selbstregulierendes Durchflussregelventil bedeutet, dass die Durchflussmenge mittels eines mechanischen Durchflussreglers geregelt wird. Dieser kann beispielsweise über eine mechanische Feder und eine daran befestigte Kugel verfügen, wobei die Kugel je nach anliegendem Druck mehr oder weniger gegen die Feder gedrückt wird und entsprechend einen geringeren oder größeren Querschnitt des zweiten Parallelabschnitts freigibt. Nimmt der Druck im zweiten Parallelabschnitt zu, so wird die Kugel gegen die Feder gedrückt und der Strömungsquerschnitt im zweiten Parallelabschnitt wird verringert. Nimmt der Druck im zweiten Parallelabschnitt ab, so wird die Kugel nicht mehr so stark gegen die Feder gedrückt und der Strömungsquerschnitt wird wieder vergrößert. Ein selbstregulierendes Durchflussregelventil kann stromaufwärts oder stromabwärts der elektrischen Antriebskomponenten im zweiten Parallelabschnitt angeordnet sein. Dies erhöht vorteilhaft den Spielraum bei der Nutzung des vorhandenen Bauraums.

Eine erfindungsgemäße Steuereinheit ist zum Prüfen eines Betriebszustands des Verbrennungsmotors und zum Ausgeben von Steuersignalen an die Hauptpumpeinrichtung und die Hilfspumpeinrichtung in Abhängigkeit des Betriebszustands des Verbrennungsmotors eingerichtet und ausgebildet. Die Steuereinheit dient dem Steuern einer Anordnung gemäß vorstehender Beschreibung. Folglich sind mit der Steuereinheit die Vorteile der Anordnung entsprechend verbunden.

Die Steuereinheit kann hardware- und/oder softwaremäßig realisiert sein und physisch ein- oder mehrteilig ausgebildet sein. Die Steuereinheit kann Teil einer Motorsteuerung sein oder in diese integriert sein.

Der Betriebszustand des Verbrennungsmotors kann in einen eingeschalteten Betriebszustand und in einen ausgeschalteten Betriebszustand unterteilt werden. Eingeschalteter Betriebszustand bedeutet, dass ein Verbrennungsvorgang stattfindet und ein Kühlbedarf bestehen kann. Ausgeschalteter Betriebszustand bedeutet, dass kein Verbrennungsvorgang stattfindet und der Verbrennungsmotor keiner Kühlung bedarf.

Welcher Betriebszustand vorliegt, kann beispielsweise anhand von Sensorsignalen von Sensoren zur Überwachung des Verbrennungsvorgangs ermittelt werden, die von der Steuereinheit empfangen und ausgewertet werden. Alternativ kann die Steuereinheit selbst auch Steuersignale zur Festlegung des Betriebszustands des Verbrennungsmotors ausgeben, so dass der vorliegende Betriebszustand anhand des ausgegebenen Steuersignals zur Festlegung des Betriebszustands ermittelt werden kann.

Die Steuereinheit sendet Steuersignale an die Hauptpumpeinrichtung und die Hilfspumpeinrichtung als Aktuatoren, die basierend auf Anweisungen oder einem in der Steuereinheit programmierten Code entsprechend einer oder mehrerer Routinen generiert werden. Weitere Steuersignale können an, sofern vorhanden, die Drosseleinrichtung und/oder die Durchflusssteuereinrichtung ausgegeben werden. Folglich steht die Steuereinheit in einer signaltechnischen Wirkverbindung mit der Hauptpumpeinrichtung und der Hilfspumpeinrichtung sowie ggf. mit der Drosseleinrichtung und/oder der Durchflusssteuereinrichtung.

Außerdem kann die Steuereinheit dazu ausgebildet und eingerichtet sein, Sensorsignale eines oder mehrerer Temperatursensoren zu empfangen und zu verarbeiten und die verarbeiteten Sensorsignale in die Generierung der Steuersignale mit einzubeziehen. Beispielsweise können Temperatursensoren zur Ermittlung der Temperatur des Temperiermittels vorgesehen sein, die in einer signaltechnischen Wirkverbindung mit der Steuereinheit stehen. Weitere Temperatursensoren können zur Ermittlung der Temperatur der elektrischen Antriebskomponenten, des Verbrennungsmotors, der Umgebungstemperatur und/oder der Innenraumlufttemperatur vorgesehen sein, deren Sensorsignale ebenfalls mit in die Generierung des Steuersignals für die Pumpeinrichtungen einbezogen werden können.

Ein erfindungsgemäßes Hybridfahrzeug weist eine Anordnung sowie eine Steuereinheit gemäß vorstehender Beschreibung auf. Die Vorteile des erfindungsgemäßen Hybridfahrzeugs entsprechen folglich denen der erfindungsgemäßen Anordnung sowie der Steuereinheit.

Unter einem Hybridfahrzeug kann jedes mobile Verkehrsmittel, d. h. sowohl ein Landfahrzeug als auch ein Wasser- oder Luftfahrzeug, z. B. ein Personenkraftwagen, verstanden werden, dass neben einem verbrennungsmotorischen Antrieb auch einen elektrischen Antrieb aufweist. Das Fahrzeug kann z. B. als Mildhybridelektrofahrzeug oder Vollhybridelektrofahrzeug ausgebildet sein. Der Hybridelektroantriebsstrang kann verschiedene Konfigurationen aufweisen, z. B. eine P0-, P1- oder P2-Konfiguration.

Das erfindungsgemäße Verfahren zum Temperieren eines Verbrennungsmotors und elektrischer Antriebskomponenten eines Hybridfahrzeugs mittels einer Anordnung gemäß vorstehender Beschreibung weist ein Prüfen des Betriebszustands des Verbrennungsmotors auf. Bei ausgeschaltetem Verbrennungsmotor wird die Hauptpumpeinrichtung deaktiviert und die Hilfspumpeinrichtung aktiviert. Bei eingeschaltetem Verbrennungsmotor wird die Hauptpumpeinrichtung aktiviert und die Hilfspumpeinrichtung deaktiviert.

Folglich ist jeweils nur eine der beiden Pumpeinrichtungen aktiv und die Energie zum Betreiben der jeweils anderen Pumpe kann eingespart werden. "Aktivieren" bzw. "Deaktivieren" schließt ein, dass die entsprechende Pumpeinrichtung im aktivierten bzw. deaktivierten Zustand belassen wird, falls sich diese bereits im aktivierten bzw. deaktivierten Zustand befindet.

Mit dem Verfahren sind die vorstehend mit Bezug auf die Anordnung genannten Vorteile entsprechend verbunden. Das Verfahren kann bevorzugt computerimplementiert durchgeführt werden, d. h. einige oder alle Verfahrensschritte werden mittels einer Steuereinheit automatisiert ausgeführt.

Gemäß verschiedenen Ausführungsvarianten kann das Verfahren ein Antreiben der Hauptpumpeinrichtung mittels des Verbrennungsmotors aufweisen, wobei die Hauptpumpeinrichtung bei Einschalten des Verbrennungsmotors aktiviert und bei Ausschalten des Verbrennungsmotors deaktiviert wird.

Das Koppeln des Ein- und Ausschaltens des Verbrennungsmotors mit dem Aktivieren und Deaktivieren der Hauptpumpeinrichtung ermöglicht ein automatisiertes, wenig fehleranfälliges und zudem energiesparendes Betreiben der Hauptpumpeinrichtung.

Die Erfindung wird nachfolgend anhand der Abbildungen und der zugehörigen Beschreibung näher erläutert. Es zeigen:
- Figur 1: eine schematische Darstellung einer Anordnung nach dem Stand der Technik;
- Figur 2: eine schematische Darstellung einer beispielhaften Anordnung;
- Figur 3: eine schematische Darstellung einer zweiten beispielhaften Anordnung mit aktivierter Hauptpumpeinrichtung;
- Figur 4: eine schematische Darstellung der zweiten beispielhaften Anordnung mit deaktivierter Hauptpumpeinrichtung;
- Figur 5: eine schematische Darstellung eines beispielhaften Hybridfahrzeugs;
- Figur 6: eine schematische Darstellung einer dritten beispielhaften Anordnung;
- Figur 7: eine schematische Darstellung einer vierten beispielhaften Anordnung;
- Figur 8: eine schematische Darstellung einer fünften beispielhaften Anordnung;
- Figur 9: eine schematische Darstellung einer sechsten beispielhaften Anordnung;
- Figur 10: eine schematische Darstellung einer siebenten beispielhaften Anordnung;
- Figur 11: eine schematische Darstellung einer achten beispielhaften Anordnung;
- Figur 12: eine schematische Darstellung einer neunten beispielhaften Anordnung; und
- Figur 13: eine schematische Darstellung einer zehnten beispielhaften Anordnung.

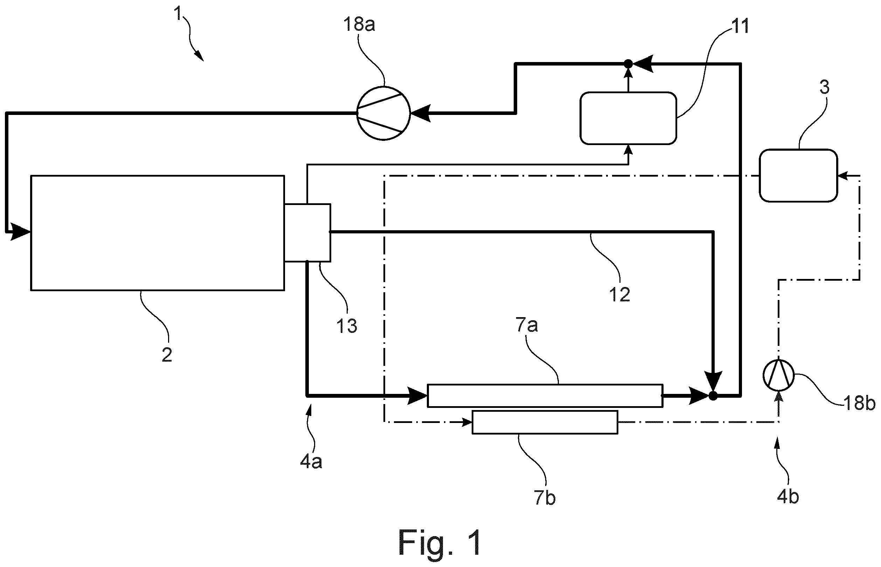

Figur 1 zeigt eine Anordnung 1 zur Temperierung, insbesondere Kühlung, eines Verbrennungsmotors 2 und elektrischer Komponenten 3 eines Hybridfahrzeugs gemäß dem Stand der Technik.

Die Anordnung 1 weist zwei voneinander getrennte Temperierkreisläufe 4a, 4b auf, wovon der erste Temperierkreislauf 4a (durchgezogene Linie) der Temperierung des Verbrennungsmotors 2 und der zweite Temperierkreislauf 4b (Strich-Punkt-Linie) der Temperierung der elektrischen Antriebskomponenten 3, z. B. eines Wechselrichters, dient. Jeder Temperierkreislauf 4a, 4b verfügt über jeweils eine Pumpe 18a, 18b und jeweils einen Kühler 7a, 7b, die zur Wärmeübertragung zwischen dem Temperiermittel und der Umgebungsluft ausgebildet sein können.

Im ersten Temperierkreislauf 4a wird das Temperiermittel, z. B. Wasser, von der Abwärme des Verbrennungsmotors 2 erwärmt. Das erwärmte Temperiermittel gelangt zur Durchflusssteuereinrichtung 13, die das Temperiermittel auf den Wärmeüberträger 11, der der Wärmeübertragung zwischen dem Temperiermittel und der Fahrzeuginnenraumluft dient, den Bypass 12 und den Kühler 7a aufteilt. Nach dem Passieren des Wärmeüberträgers 11, des Bypasses 12 und/oder des Kühlers 7a werden die Teilströme des Temperiermittels vereinigt und mittels der Pumpe 18a wieder zum Verbrennungsmotor befördert.

Durch Steuerung der jeweiligen Durchflussmengen kann die Mischtemperatur des Temperiermittels stromaufwärts des Verbrennungsmotors 2 festgelegt und dadurch die Kühlleistung beeinflusst werden.

Im zweiten Temperierkreislauf 4b wird das Temperiermittel von der Abwärme der elektrischen Antriebskomponente 3 erwärmt. Das erwärmte Temperiermittel gelangt in den Kühler 7b, der geringer als der Kühler 7a dimensioniert sein kann, da der Verbrennungsmotor 2 meist einer höheren Kühlleistung bedarf als die elektrischen Antriebskomponenten 3. Nach dem Passieren des Kühlers 7b wird das abgekühlte Temperiermittel mittels der Pumpe 18b wieder zur elektrischen Antriebskomponente 3 befördert.

Aufgrund der Separation der beiden Temperierkreisläufe 4a, 4b muss die Pumpe 18b immer eingeschaltet sein, sobald eine Kühlung der elektrischen Antriebskomponente 3 erforderlich ist, also auch, wenn sich der Verbrennungsmotor 2 in einem eingeschalteten Betriebszustand befindet und die Pumpe 18a aktiviert ist. Außerdem wird neben dem Kühler 7a ein weiterer Kühler 7b benötigt.

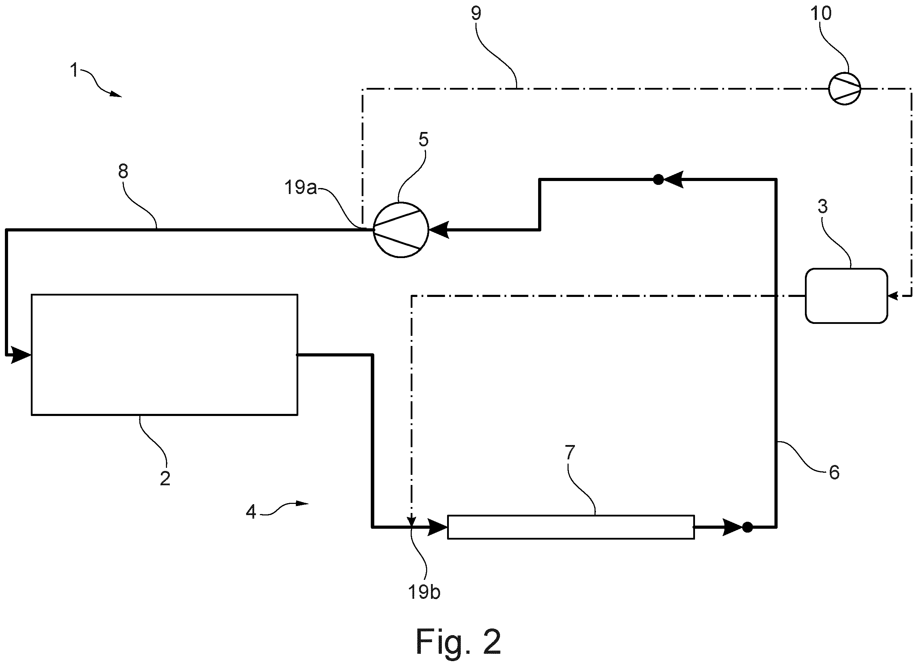

Um die damit einhergehenden Nachteile zu beheben, wird eine modifizierte Anordnung zur Temperierung eines Verbrennungsmotors 2 und elektrischer Komponenten 3 eines Hybridfahrzeugs 17 vorgeschlagen, von der mögliche Ausführungsformen in den Figuren 2 bis 13 schematisch dargestellt sind.

Im Unterschied zur Anordnung 1 der Figur 1 weist die Anordnung 1 der Figur 2 einen gemeinsamen Temperierkreislauf 4 auf, der sowohl der Temperierung des Verbrennungsmotors 2 als auch der elektrischen Antriebskomponente 3, z. B. eines Wechselrichters und/oder einer Elektromaschine, dient. Der Temperierkreislauf 4 wird durch einen Hauptabschnitt 6, einen ersten Parallelabschnitt 8 (durchgezogene Linie) und einen zweiten, parallel zum ersten Parallelabschnitt 8 angeordneten zweiten Parallelabschnitt 9 (Strich-Punkt-Linie) gebildet.

Im Hauptabschnitt 6 ist ein Kühler 7 angeordnet, um Wärme von dem im Temperierkreislauf 4 strömenden Temperiermittel auf die Umgebungsluft übertragen zu können. Optional kann die Wärme auch z. B. an ein Kältemittel übertragen werden. Beim Passieren des Kühlers 7 wird das Temperiermittel abgekühlt. Das abgekühlte Temperiermittel gelangt zur Hauptpumpeinrichtung 5, die ebenfalls im Hauptabschnitt 6 angeordnet ist und mittels des Verbrennungsmotors 2 angetrieben wird. Beispielsweise können die Hauptpumpeinrichtung 5 und der Verbrennungsmotor 2 mechanisch miteinander verbunden sein.

Nach dem Passieren der Hauptpumpeinrichtung 5 gelangt das kühle Temperiermittel zur Verzweigungsstelle 19a, an der sich der Temperierkreislauf 4 in den ersten Parallelabschnitt 8 und den zweiten Parallelabschnitt 9 verzweigt. An der Verzweigungsstelle 19a kann optional eine Durchflusssteuereinrichtung angeordnet sein (nicht dargestellt), um das Temperiermittel auf den ersten und zweiten Parallelabschnitt 8, 9 aufteilen zu können.

Im ersten Parallelabschnitt 8 gelangt das Temperiermittel zum Verbrennungsmotor 2 und nimmt unter Erwärmung Abwärme des Verbrennungsmotors 2 auf, so dass dieser gekühlt wird. Im zweiten Parallelabschnitt 9 gelangt das Temperiermittel über die Hilfspumpeinrichtung 10 zur elektrischen Antriebskomponente 3 und nimmt unter Erwärmung Abwärme der elektrischen Antriebskomponente 3 auf, so dass diese gekühlt wird.

An der Verzweigungsstelle 19b, an der optional ebenfalls oder alternativ zur Verzweigungsstelle 19a eine Durchflusssteuereinrichtung (nicht dargestellt) angeordnet sein kann, vereinigen sich die beiden den ersten Parallelabschnitt 8 und den zweiten Parallelabschnitt 9 durchströmenden Temperiermittelteilströme wieder. Anschließend gelangt das Temperiermittel in den Kühler 7, in dem das Temperiermittel gekühlt wird, z. B. indem Wärme an die Umgebungsluft oder ein Kältemittel übertragen wird. Das gekühlte Temperiermittel strömt weiter zur Hauptpumpeinrichtung 5.

Die Hauptpumpeinrichtung 5 ist mittels des Verbrennungsmotors 2 betreibbar und mit diesem mechanisch gekoppelt. Dies bedeutet, dass die Hauptpumpeinrichtung 5 in einem eingeschalteten Betriebszustand des Verbrennungsmotors 2 automatisch aktiviert und in einem ausgeschalteten Betriebszustand des Verbrennungsmotors 2 automatisch deaktiviert ist.

Die Hilfspumpeinrichtung 10 ist elektrisch betreibbar. Im deaktivierten Zustand 10 wirkt die Hilfspumpeinrichtung 10 als Drossel. Optional kann die Drosselwirkung im deaktivierten Zustand einstellbar sein.

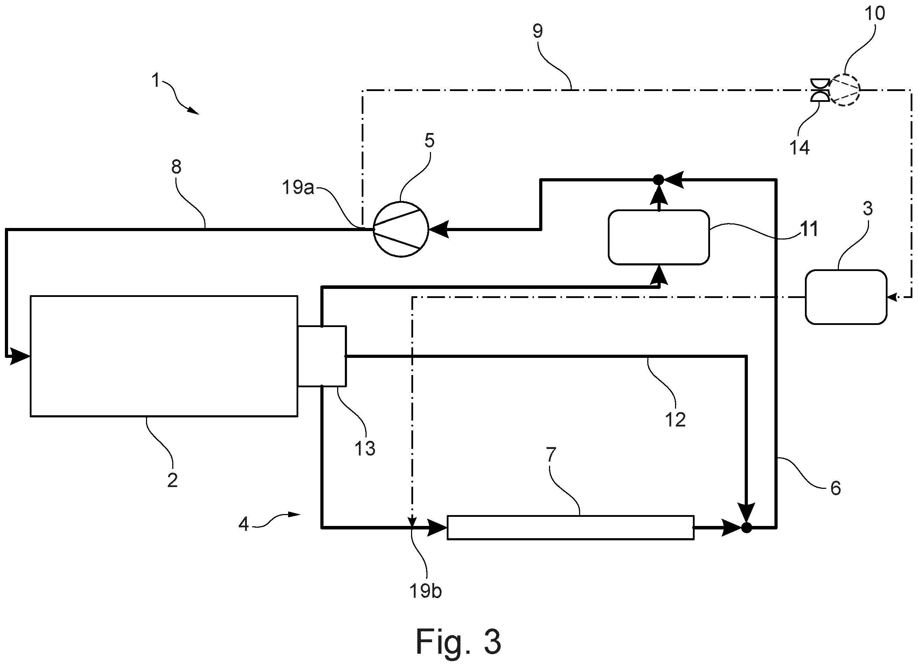

Figur 3 zeigt eine zweite beispielhafte Anordnung 1. Im Vergleich zur Anordnung 1 der Figur 2 ist im zweiten Parallelabschnitt 9 stromaufwärts der Hilfspumpeinrichtung 10 eine Drosseleinrichtung 14 angeordnet, mit der die Durchflussmenge des Temperiermittels durch den zweiten Parallelabschnitt 9 gesteuert werden kann.

Weiterhin ist eine Verzweigung des ersten Parallelabschnitts 8 vorgesehen. Nach dem Passieren des Verbrennungsmotors 2 gelangt das erwärmte Temperiermittel zur Durchflusssteuereinrichtung 13, die das Temperiermittel auf den Wärmeüberträger 11, der der Wärmeübertragung zwischen dem Temperiermittel und der Fahrzeuginnenraumluft dient, den Bypass 12 und den Kühler 7 aufteilt. Durch Steuerung der Durchflussmengen durch den Wärmeüberträger 11, den Bypass 12 und den Kühler 7 kann die Mischtemperatur des Temperiermittels stromaufwärts des Verbrennungsmotors 2 festgelegt und dadurch die Kühlleistung beeinflusst werden.

Es sei darauf hingewiesen, dass die Verzeigung des ersten Parallelabschnitts 8 und die Drosseleinrichtung 14 voneinander funktional unabhängig sind. Folglich ist eine weitere beispielhafte Anordnung die in Figur 2 gezeigte Anordnung ergänzt um die Drosseleinrichtung 14, jedoch ohne Verzeigung des ersten Parallelabschnitts 8. Eine weitere beispielhafte Anordnung ist die in Figur 2 gezeigte Anordnung ergänzt um die Verzweigung des ersten Parallelabschnitts 8 mit Kühler 7, Wärmeüberträger 11 und Bypass 12, jedoch ohne Drosseleinrichtung 14.

Weiterhin wäre auch eine Verzweigung des ersten Parallelabschnitts 8 derart möglich, dass neben dem Kühler 7 entweder ein Bypass 12 oder ein Wärmeträger 11 vorgesehen ist.

In Figur 3 ist die Anordnung 1 mit aktivierter Hauptpumpeinrichtung 5 und deaktivierter Hilfspumpeinrichtung 10 (gestrichelte Darstellung) dargestellt. Dieser Zustand wird im Rahmen eines Verfahrens zum Temperieren des Verbrennungsmotors 2 und der elektrischen Antriebskomponente 3 eingenommen, bei dem in einem ersten Schritt der Betriebszustand des Verbrennungsmotors geprüft hat, d. h. es wird festgestellt, ob sich der Verbrennungsmotor 2 in einem eingeschalteten Betriebszustand oder einem ausgeschalteten Betriebszustand befindet.

Bei eingeschaltetem Verbrennungsmotor 2 wird, wie in Figur 3 dargestellt, die Hauptpumpeinrichtung 5 aktiviert und die Hilfspumpeinrichtung 10 deaktiviert. Folglich wird der Temperiermittelstrom im Temperierkreislauf 4, also auch im zweiten Parallelabschnitt 9, alleinig mittels der Hauptpumpeinrichtung 5 ausgebildet. Die elektrische Energie zum Betreiben der Hilfspumpeinrichtung 10 kann eingespart werden. Außerdem wird ein gemeinsamer Kühler 7 genutzt, so dass Kosten und Bauraum eingespart werden können.

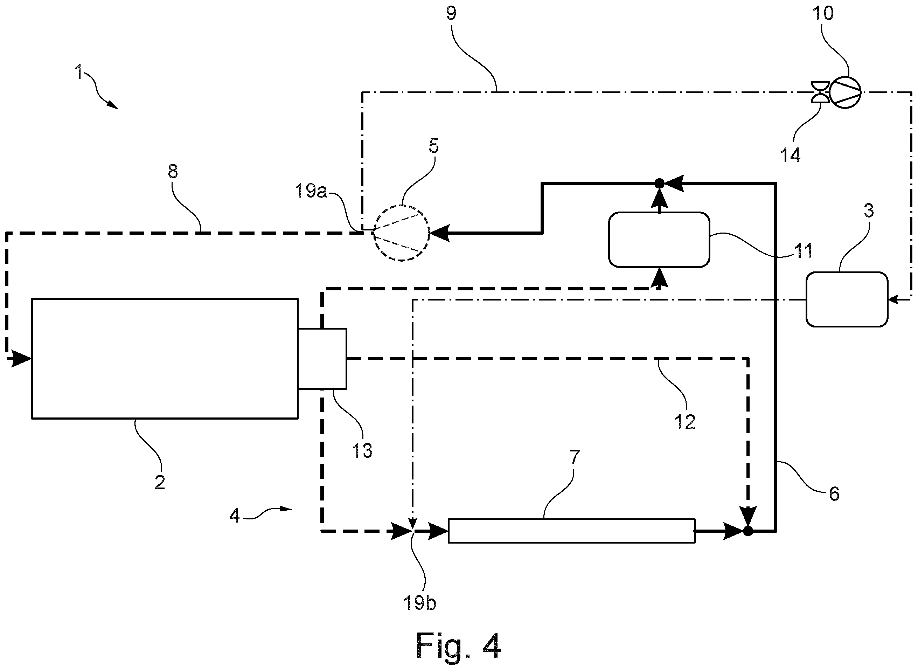

Figur 4 zeigt die Anordnung 1 der Figur 3 mit deaktivierter Hauptpumpeinrichtung 5 und aktivierter Hilfspumpeinrichtung 10. Dieser Zustand wird im Rahmen eines Verfahrens zum Temperieren des Verbrennungsmotors 2 und der elektrischen Antriebskomponente 3 eingenommen, falls das Prüfen des Betriebszustands des Verbrennungsmotors 2 ergibt, dass der Verbrennungsmotor 2 ausgeschaltet ist und folglich eine Kühlung des Verbrennungsmotors 2 nicht notwendig ist. In diesem Fall wird der Temperiermittelstrom durch den zweiten Parallelabschnitt 9 mittels der Hilfspumpeinrichtung 10 ausgebildet. Das erwärmte Temperiermittel strömt von der elektrischen Antriebskomponente 3 zum Kühler 7 und über die Drosseleinrichtung 14 und die Hilfspumpeinrichtung 10 wieder zur elektrischen Antriebskomponente 3.

Das Verfahren kann ebenso auf die Anordnung 1 der Figuren 2 sowie 6 bis 12 angewandt werden.

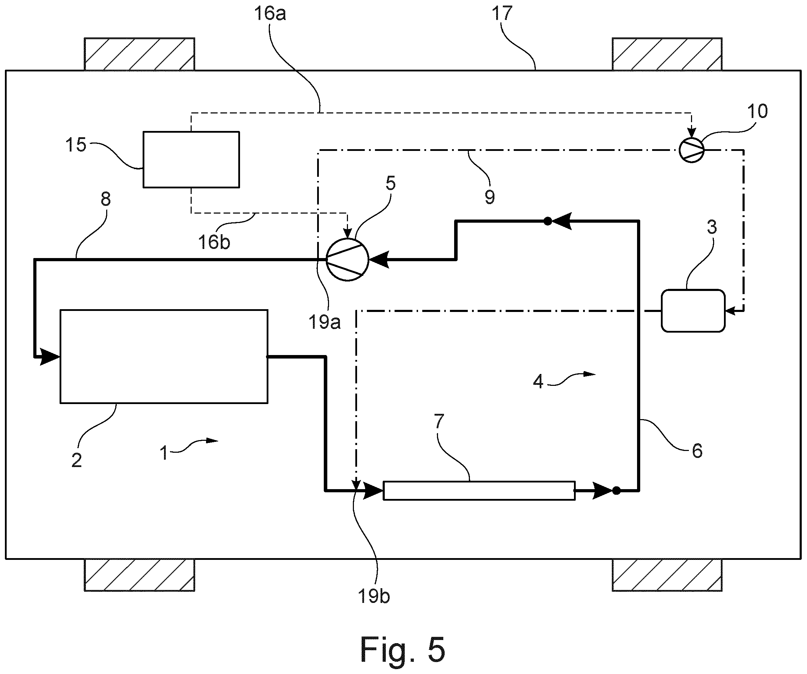

Figur 5 zeigt ein beispielhaftes Hybridfahrzeug 17 mit einer Anordnung 1 und einer Steuereinheit 15. Zur Beschreibung der Anordnung 1 wird auf die Erläuterungen zu Figur 2 verwiesen. Alternativ kann das Hybridfahrzeug 17 auch eine der bezugnehmend auf die Figuren 3 und 4 sowie 6 bis 13 beschriebenen Anordnungen 1 aufweisen.

Die Steuereinheit 15 ist zum Steuern der Anordnung 1 eingerichtet und ausgebildet. Hierzu kann die Steuereinheit 15 den Betriebszustand des Verbrennungsmotors 2 prüfen, d. h. feststellen, ob sich der Verbrennungsmotor 2 in einem eingeschalteten oder ausgeschalteten Zustand befindet, und in Abhängigkeit des Betriebszustands des Verbrennungsmotors 2 Steuersignale 16a, 16b an die Hilfspumpeinrichtung 10 und die Hauptpumpeinrichtung 5 ausgeben, um diese zu aktivieren bzw. zu deaktivieren.

Optional kann die Steuereinheit 15 dazu eingerichtet und ausgebildet sein, Sensorsignale von Temperatursensoren (nicht dargestellt) zu empfangen und zu verarbeiten und diese beim Ausgeben der Steuersignale 16a, 16b zu berücksichtigen. Beispielsweise kann vorgesehen sein, dass die Hilfspumpeinrichtung 10 bei ausgeschalteten Verbrennungsmotor 2 nur aktiviert wird, wenn eine Temperaturobergrenze überschritten wird und folglich ein Kühlbedarf der elektrischen Antriebskomponente 3 gegeben ist.

Weitere Steuersignale können an die Durchflusssteuereinrichtung 13 (siehe Figuren 3 und 4) und/oder Durchflusssteuereinrichtungen an den Verzweigungsstellen 19a, 19b sowie die Drosseleinrichtung 14 ausgegeben werden.

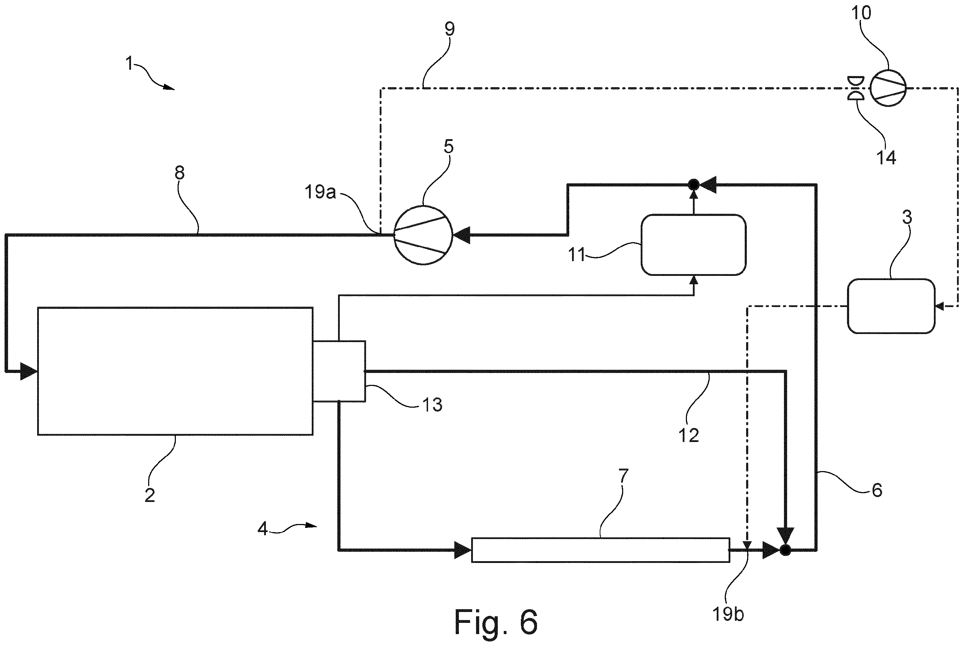

Figur 6 zeigt eine dritte beispielhafte Anordnung 1. Im Vergleich zur Anordnung 1 der Figuren 3 und 4 ist die Verzweigungsstelle 19b, an der sich die im ersten Parallelabschnitt 8 und im zweiten Parallelabschnitt 9 strömenden Temperiermittelströme vereinigen, unmittelbar stromabwärts des Kühlers 7 angeordnet. Folglich befindet sich der Kühler 7 nicht mehr im Hauptabschnitt 6, sondern im ersten Parallelabschnitt 8.

Optional wäre es auch möglich, die Verzweigungsstelle 19b, an der sich die im ersten Parallelabschnitt 8 und im zweiten Parallelabschnitt 9 strömenden Temperiermittelströme vereinigen, nicht unmittelbar stromabwärts des Kühlers 7 anzuordnen, sondern weiter stromabwärts, z. B. nach dem Einleitpunkt des Bypasses 12 oder dem Einleitpunkt des Wärmeüberträgers 11 (nicht dargestellt).

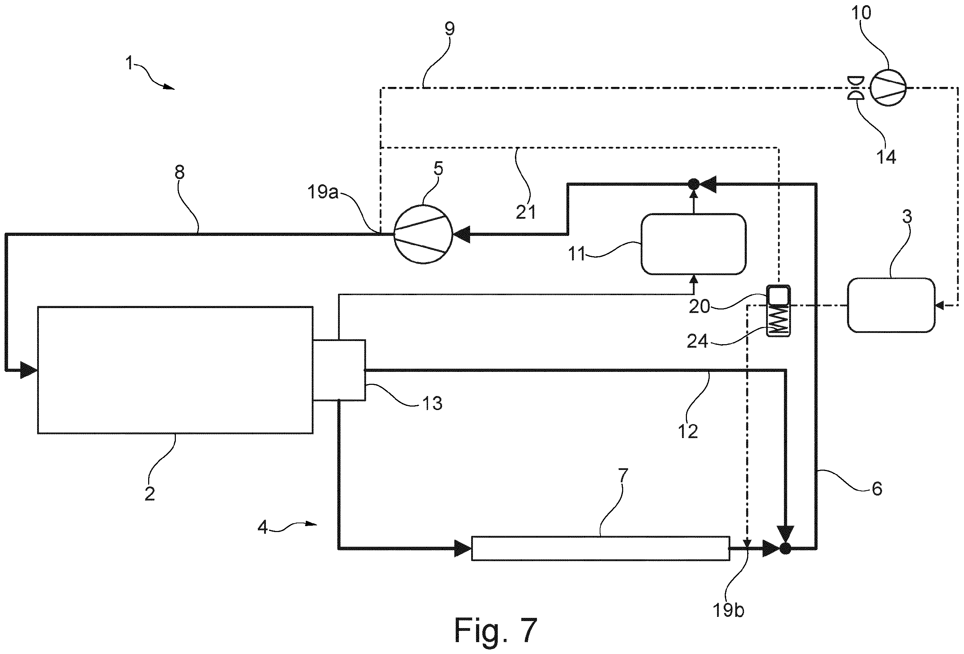

Figur 7 zeigt eine vierte beispielhafte Anordnung 1. Im Vergleich zur Anordnung 1 der Figur 6 ist im zweiten Parallelabschnitt 9 stromabwärts der elektrischen Antriebskomponente 3 zusätzlich ein Ventil 20 angeordnet, welches dazu ausgebildet ist, eine Durchflussmenge des Temperiermittelteilstroms im zweiten Parallelabschnitt 9 zu steuern. Konkret handelt es sich bei dem Ventil 20 um ein druckgeregeltes Ventil, dass mit einer Hilfsdruckleitung 21 gekoppelt ist. Die Hilfsdruckleitung 21 zweigt am Anfang des zweiten Parallelabschnitts 9 ab. Je nach Druck in der Hilfsdruckleitung 21 öffnet bzw. schließt das Ventil 20 mittels einer Feder 24, so dass die Durchflussmenge im zweiten Parallelabschnitt 9 erhöht bzw. verringert wird.

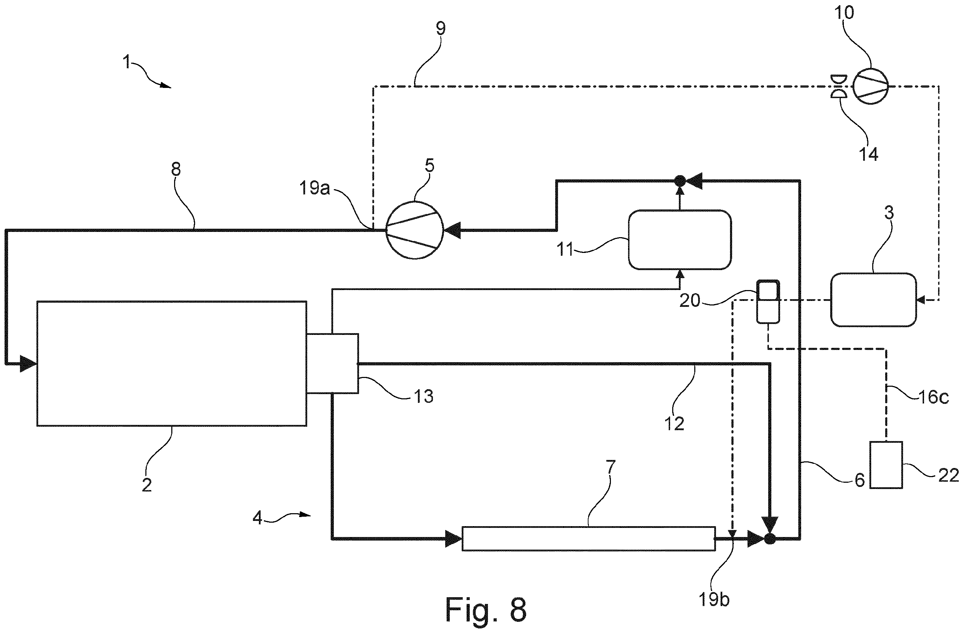

Figur 8 zeigt eine fünfte beispielhafte Anordnung 1. Im Vergleich zur Anordnung 1 der Figur 6 ist im zweiten Parallelabschnitt 9 stromabwärts der elektrischen Antriebskomponente 3 zusätzlich ein Ventil 20 angeordnet, welches dazu ausgebildet ist, eine Durchflussmenge des Temperiermittelteilstroms im zweiten Parallelabschnitt 9 zu steuern. Konkret handelt es sich bei dem Ventil 20 um ein von einer Ventilsteuereinheit 22 gesteuertes Elektromagnetventil. Dafür sind das Ventil 20 und die Ventilsteuereinheit 22 signalübertragend miteinander verbunden, so dass ein Steuersignal 16c von der Ventilsteuereinheit 22 an das Ventil 20 übertragen werden kann. Die Ventilsteuereinheit kann Teil einer Motorsteuereinheit des Hybridfahrzeugs sein.

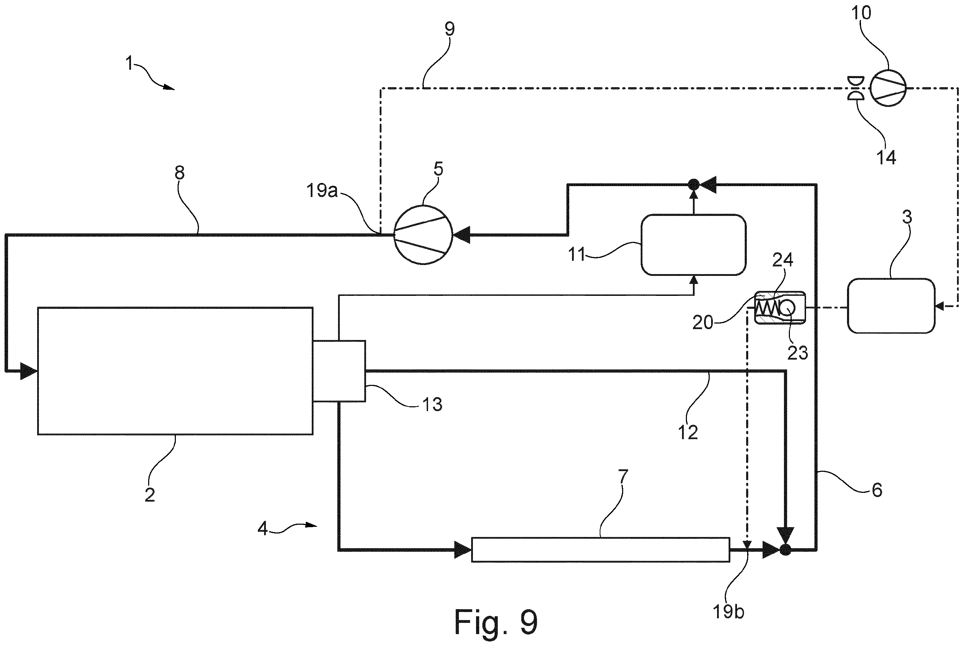

Figur 9 zeigt eine sechste beispielhafte Anordnung 1. Im Vergleich zur Anordnung 1 der Figur 6 ist im zweiten Parallelabschnitt 9 stromabwärts der elektrischen Antriebskomponente 3 zusätzlich ein Ventil 20 angeordnet, welches dazu ausgebildet ist, eine Durchflussmenge des Temperiermittelteilstroms im zweiten Parallelabschnitt 9 zu steuern. Konkret handelt es sich bei dem Ventil 20 um ein selbstregulierendes Durchflussregelventil. Das Durchflussregelventil weist eine mechanische Feder 24 und eine daran befestigte Kugel 23 auf. Nimmt der Druck im zweiten Parallelabschnitt 9 zu, so wird die Kugel 23 gegen die Feder 24 gedrückt und der Strömungsquerschnitt im zweiten Parallelabschnitt 9 wird verringert. Nimmt der Druck im zweiten Parallelabschnitt 9 ab, so wird die Kugel 23 nicht mehr so stark gegen die Feder 24 gedrückt und der Strömungsquerschnitt wird wieder vergrößert.

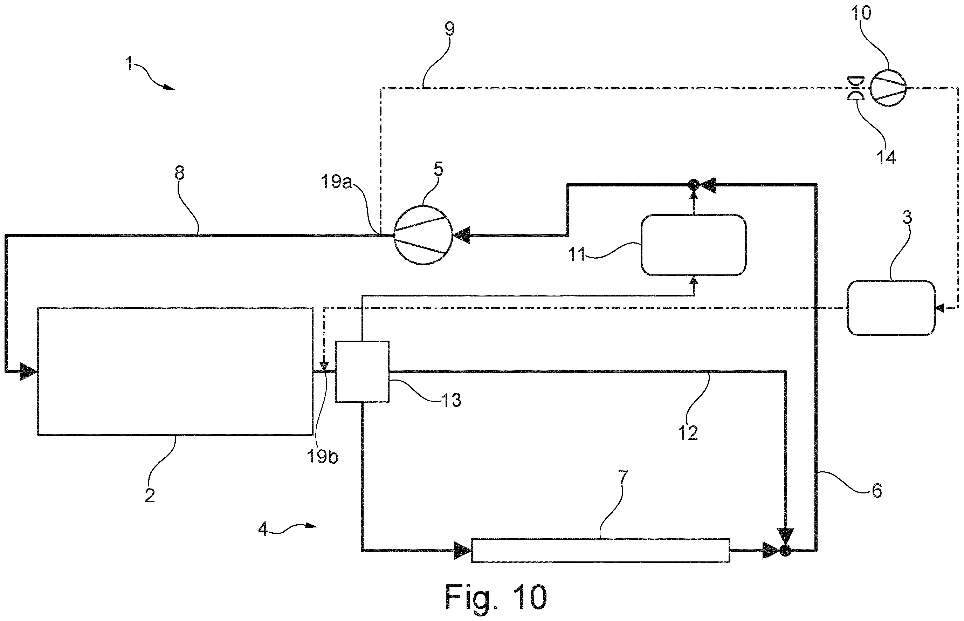

Figur 10 zeigt eine siebente beispielhafte Anordnung 1. Im Vergleich zur Anordnung 1 der Figuren 3 und 4 ist die Verzweigungsstelle 19b, an der sich die im ersten Parallelabschnitt 8 und im zweiten Parallelabschnitt 9 strömenden Temperiermittelströme vereinigen, unmittelbar stromaufwärts der Durchflusssteuereinrichtung 13, bei der es sich im Ausführungsbeispiel um ein Thermostatventil handelt, angeordnet. Der Kühler 7 befindet sich wie bei den Ausführungsvarianten gemäß den Figuren 3 und 4 im Hauptabschnitt 6.

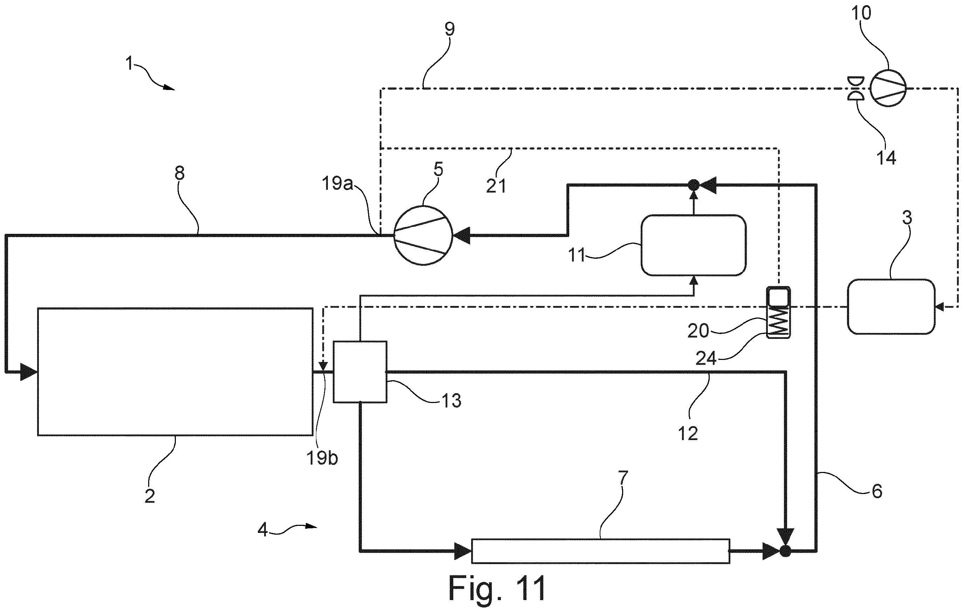

Figur 11 zeigt eine achte beispielhafte Anordnung 1. Im Vergleich zur Anordnung 1 der Figur 10 ist im zweiten Parallelabschnitt 9 stromabwärts der elektrischen Antriebskomponente 3 zusätzlich ein Ventil 20 angeordnet, welches dazu ausgebildet ist, eine Durchflussmenge des Temperiermittelteilstroms im zweiten Parallelabschnitt 9 zu steuern. Konkret handelt es sich bei dem Ventil 20 um ein druckgeregeltes Ventil, dass mit einer Hilfsdruckleitung 21 gekoppelt ist. Die Hilfsdruckleitung 21 zweigt am Anfang des zweiten Parallelabschnitts 9 ab. Je nach Druck in der Hilfsdruckleitung 21 öffnet bzw. schließt das Ventil 20 mittels einer Feder 24, so dass die Durchflussmenge im zweiten Parallelabschnitt 9 erhöht bzw. verringert wird.

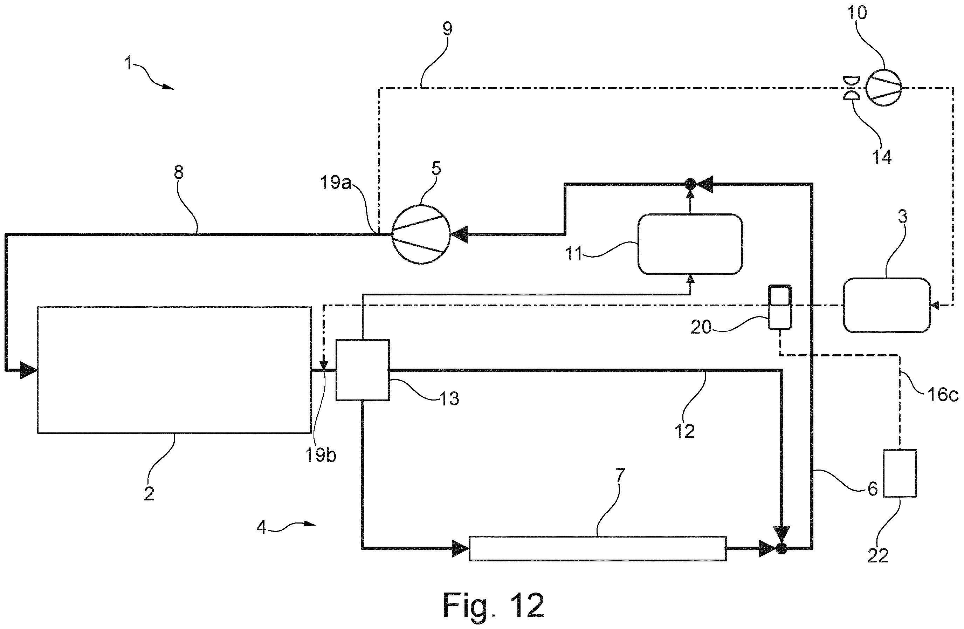

Figur 12 zeigt eine neunte beispielhafte Anordnung 1. Im Vergleich zur Anordnung 1 der Figur 10 ist im zweiten Parallelabschnitt 9 stromabwärts der elektrischen Antriebskomponente 3 zusätzlich ein Ventil 20 angeordnet, welches dazu ausgebildet ist, eine Durchflussmenge des Temperiermittelteilstroms im zweiten Parallelabschnitt 9 zu steuern. Konkret handelt es sich bei dem Ventil 20 um ein von einer Ventilsteuereinheit 22 gesteuertes Elektromagnetventil. Dafür sind das Ventil 20 und die Ventilsteuereinheit 22 signalübertragend miteinander verbunden, so dass ein Steuersignal 16c von der Ventilsteuereinheit 22 an das Ventil 20 übertragen werden kann. Die Ventilsteuereinheit kann Teil einer Motorsteuereinheit des Hybridfahrzeugs sein.

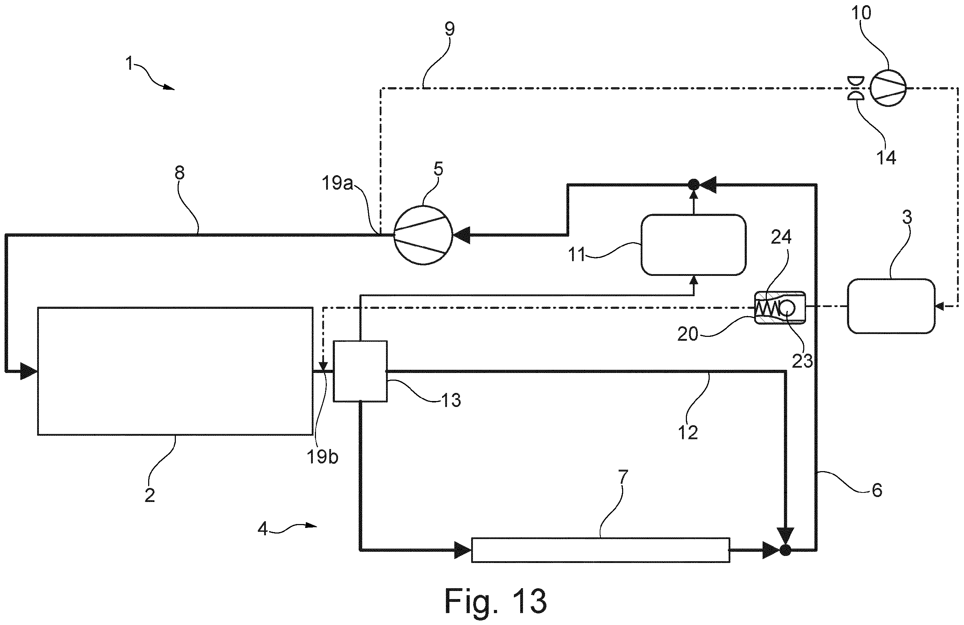

Figur 13 zeigt eine zehnte beispielhafte Anordnung 1. Im Vergleich zur Anordnung 1 der Figur 10 ist im zweiten Parallelabschnitt 9 stromabwärts der elektrischen Antriebskomponente 3 zusätzlich ein Ventil 20 angeordnet, welches dazu ausgebildet ist, eine Durchflussmenge des Temperiermittelteilstroms im zweiten Parallelabschnitt 9 zu steuern. Konkret handelt es sich bei dem Ventil 20 um ein selbstregulierendes Durchflussregelventil. Das Durchflussregelventil weist eine mechanische Feder 24 und eine daran befestigte Kugel 23 auf. Nimmt der Druck im zweiten Parallelabschnitt 9 zu, so wird die Kugel 23 gegen die Feder 24 gedrückt und der Strömungsquerschnitt im zweiten Parallelabschnitt 9 wird verringert. Nimmt der Druck im zweiten Parallelabschnitt 9 ab, so wird die Kugel 23 nicht mehr so stark gegen die Feder 24 gedrückt und der Strömungsquerschnitt wird wieder vergrößert.

In den Figuren 6 bis 13 ist die Drosseleinrichtung 14 fakultativ. D. h. sie kann ggf. entfallen, z. B. falls die Druckverluste in den Leitungen und Komponenten des zweiten Parallelabschnitts 9 ausreichend hoch sind.

### Bezugszeichenliste

- 1: Anordnung
- 2: Verbrennungsmotor
- 3: elektrische Antriebskomponente
- 4, 4a, 4b: Temperierkreislauf
- 5: Hauptpumpeinrichtung
- 6: Hauptabschnitt
- 7, 7a, 7b: Kühler
- 8: erster Parallelabschnitt
- 9: zweiter Parallelabschnitt
- 10: Hilfspumpeinrichtung
- 11: Wärmeüberträger
- 12: Bypass
- 13: Durchflusssteuereinrichtung
- 14: Drosseleinrichtung
- 15: Steuereinheit
- 16a, 16b, 16c: Steuersignal
- 17: Hybridfahrzeug
- 18a, b: Pumpe
- 19a, 19b: Verzweigungsstelle
- 20: Ventil
- 21: Hilfsdruckleitung
- 22: Ventilsteuereinheit
- 23: Kugel
- 24: Feder

## Patentansprüche

1. Anordnung (1) zur Temperierung eines Verbrennungsmotors (2) und elektrischer Antriebskomponenten (3) eines Hybridfahrzeugs (17) mit einem Temperierkreislauf (4), der Temperierkreislauf (4) aufweisend:
- einen Hauptabschnitt (6),
- eine im Hauptabschnitt (6) angeordnete Hauptpumpeinrichtung (5),
- einen ersten Parallelabschnitt (8) mit einem Verbrennungsmotor (2),
- einen zweiten Parallelabschnitt (9) mit elektrischen Antriebskomponenten (3) und einer Hilfspumpeinrichtung (10) und
- einen Kühler (7) zur Kühlung des Verbrennungsmotors (2) und der elektrischen Antriebskomponenten (3).

2. Anordnung (1) nach Anspruch 1, wobei der Kühler (7) im Hauptabschnitt (6) angeordnet ist.

3. Anordnung (1) nach Anspruch 1 oder 2, wobei die Hauptpumpeinrichtung (5) mittels des Verbrennungsmotors (2) betreibbar ist.

4. Anordnung (1) nach einem der vorstehenden Ansprüche, wobei die Hilfspumpeinrichtung (10) elektrisch betreibbar ist.

5. Anordnung (1) nach einem der vorstehenden Ansprüche, wobei die elektrischen Antriebskomponenten (3) ein Wechselrichter und/oder eine Elektromaschine sind.

6. Anordnung (1) nach einem der vorstehenden Ansprüche, aufweisend:
- einen parallel zum Kühler (7) angeordneten Wärmeüberträger (11), ausgebildet zur Wärmeübertragung zwischen einem im Temperierkreislauf (4) strömenden Temperiermittel und in einen Innenraum des Hybridfahrzeugs (17) einleitbarer Luft und/oder
- einen parallel zum Kühler (7) angeordneten Bypass (12) und
- eine Durchflusssteuereinrichtung (13), ausgebildet zur Aufteilung eines Temperiermittelstroms im Temperierkreislauf (4) auf den Kühler (7) sowie den Wärmeüberträger (11) und/oder den Bypass (12).

7. Anordnung (1) nach einem der vorstehenden Ansprüche, wobei eine Verzweigungsstelle (19b) zur Vereinigung von den ersten Parallelabschnitt (8) und den zweiten Parallelabschnitt (9) durchströmenden Temperiermittelteilströmen stromaufwärts der Durchflusssteuereinrichtung (13) angeordnet ist.

8. Anordnung (1) nach Anspruch 1 oder einem der Ansprüche 3 bis 7, wobei eine Verzweigungsstelle (19b) zur Vereinigung von den ersten Parallelabschnitt (8) und den zweiten Parallelabschnitt (9) durchströmenden Temperiermittelteilströmen stromabwärts des Kühlers (7) angeordnet ist.

9. Anordnung (1) nach einem der vorstehenden Ansprüche, aufweisend:
- eine im zweiten Parallelabschnitt (9) angeordnete Drosseleinrichtung (14).

10. Anordnung (1) nach einem der Ansprüche 1 bis 8, wobei eine Drosselwirkung der Hilfspumpeinrichtung (10) einstellbar ist.

11. Anordnung (1) nach einem der vorstehenden Ansprüche, aufweisend:
- ein im zweiten Parallelabschnitt (9) angeordnetes Ventil (20), welches dazu ausgebildet ist, eine Durchflussmenge des Temperiermittelteilstroms im zweiten Parallelabschnitt (9) zu steuern.

12. Anordnung (1) nach Anspruch 11, wobei das Ventil (20) ausgebildet ist als druckgeregeltes Ventil, als von einer Ventilsteuereinheit (22) gesteuertes Elektromagnetventil oder als selbstregulierendes Durchflussregelventil.

13. Steuereinheit (15) zum Steuern einer Anordnung (1) nach einem der vorstehenden Ansprüche, eingerichtet und ausgebildet zum Prüfen eines Betriebszustands des Verbrennungsmotors (2) und zum Ausgeben von Steuersignalen (16a, 16b) an die Hauptpumpeinrichtung (5) und die Hilfspumpeinrichtung (10) in Abhängigkeit des Betriebszustands des Verbrennungsmotors (2).

14. Hybridfahrzeug (17) mit einer Anordnung (1) nach einem der Ansprüche 1 bis 12 und einer Steuereinheit (15) nach Anspruch 13.

15. Verfahren zum Temperieren eines Verbrennungsmotors (2) und elektrischer Antriebskomponenten (3) eines Hybridfahrzeugs (17) mittels einer Anordnung (1) nach einem der Ansprüche 1 bis 12, aufweisend:
- Prüfen des Betriebszustands des Verbrennungsmotors (2),
- bei ausgeschaltetem Verbrennungsmotor (2), Deaktivieren der Hauptpumpeinrichtung (5) und Aktivieren der Hilfspumpeinrichtung (10) und
- bei eingeschaltetem Verbrennungsmotor (2), Aktivieren der Hauptpumpeinrichtung (5) und Deaktivieren der Hilfspumpeinrichtung (10).

16. Verfahren nach Anspruch 15, aufweisend:
- Antreiben der Hauptpumpeinrichtung (5) mittels des Verbrennungsmotors (2),
wobei die Hauptpumpeinrichtung (5) bei Einschalten des Verbrennungsmotors (2) aktiviert und bei Ausschalten des Verbrennungsmotors (5) deaktiviert wird.

## Claims

1. Arrangement (1) for controlling the temperature of an internal combustion engine (2) and electric drive components (3) of a hybrid vehicle (17) with a temperature control circuit (4), the temperature control circuit (4) having
- a main section (6),
- a main pumping device (5) arranged in the main section (6),
- a first parallel section (8) with an internal combustion engine (2),
- a second parallel section (9) with electric drive components (3) and an auxiliary pumping device (10), and
- a cooler (7) for cooling the internal combustion engine (2) and the electric drive components (3).

2. Arrangement (1) according to Claim 1, wherein the cooler (7) is arranged in the main section (6).

3. Arrangement (1) according to Claim 1 or 2, wherein the main pumping device (5) can be operated by means of the internal combustion engine (2).

4. Arrangement (1) according to one of the preceding claims, wherein the auxiliary pumping device (10) can be operated electrically.

5. Arrangement (1) according to one of the preceding claims, wherein the electric drive components (3) are an inverter and/or an electric machine.

6. Arrangement (1) according to one of the preceding claims, having:
- a heat exchanger (11) arranged parallel to the cooler (7), designed to transfer heat between a temperature control medium flowing in the temperature control circuit (4) and air that can be introduced into an interior of the hybrid vehicle (17) and/or
- a bypass (12) arranged parallel to the cooler (7) and
- a flow control device (13) designed to divide a temperature control medium flow in the temperature control circuit (4) to the cooler (7) and to the heat exchanger (11) and/or the bypass (12).

7. Arrangement (1) according to one of the preceding claims, wherein a branch point (19b) for combining partial temperature control medium streams flowing through the first parallel section (8) and the second parallel section (9) is arranged upstream of the flow control device (13).

8. Arrangement (1) according to Claim 1 or one of Claims 3 to 7, wherein a branch point (19b) for combining partial temperature control medium streams flowing through the first parallel section (8) and the second parallel section (9) is arranged downstream of the cooler (7).

9. Arrangement (1) according to one of the preceding claims, having:
- a throttling device (14) arranged in the second parallel section (9).

10. Arrangement (1) according to one of Claims 1 to 8, wherein a throttling action of the auxiliary pumping device (10) is adjustable.

11. Arrangement (1) according to one of the preceding claims, having:
- a valve (20) arranged in the second parallel section (9), which is designed to control a flow rate of the partial temperature control medium stream in the second parallel section (9).

12. Arrangement (1) according to Claim 11, wherein the valve (20) is designed as a pressure-controlled valve, as a solenoid valve controlled by a valve control unit (22) or as a self-regulating flow control valve.

13. Control unit (15) for controlling an arrangement (1) according to one of the preceding claims, set up and designed to check an operating state of the internal combustion engine (2) and to output control signals (16a, 16b) to the main pumping device (5) and the auxiliary pumping device (10) depending on the operating state of the internal combustion engine (2) .

14. Hybrid vehicle (17) having an arrangement (1) according to one of Claims 1 to 12 and a control unit (15) according to Claim 13.

15. Method for controlling the temperature of an internal combustion engine (2) and electric drive components (3) of a hybrid vehicle (17) by means of an arrangement (1) according to one of Claims 1 to 12, including:
- checking the operating state of the internal combustion engine (2),
- when the internal combustion engine (2) is switched off, deactivating the main pumping device (5) and activating the auxiliary pumping device (10), and
- when the internal combustion engine (2) is switched on, activating the main pumping device (5) and deactivating the auxiliary pumping device (10).

16. Method according to Claim 15, including:
- driving the main pumping device (5) by means of the internal combustion engine (2),
wherein the main pumping device (5) is activated when the internal combustion engine (2) is switched on and is deactivated when the internal combustion engine (5) is switched off.

## Revendications

1. Ensemble (1) destiné à réguler la température d'un moteur à combustion interne (2) et de composants d'entraînement électriques (3) d'un véhicule hybride (17), à l'aide d'un circuit de régulation de température (4), le circuit de régulation de température (4) comportant :
- une section principale (6),
- un module de pompage principal (5) disposé dans la section principale (6),
- une première section parallèle (8) pourvue d'un moteur à combustion interne (2),
- une deuxième section parallèle (9) pourvue de composants d'entraînement électriques (3) et d'un module de pompage auxiliaire (10) et
- un moyen de refroidissement (7) destiné à refroidir le moteur à combustion interne (2) et les composants d'entraînement électriques (3).

2. Ensemble (1) selon la revendication 1, le moyen de refroidissement (7) étant disposé dans la section principale (6).

3. Ensemble (1) selon la revendication 1 ou 2, le module de pompage principal (5) pouvant être actionné au moyen du moteur à combustion interne (2).

4. Ensemble (1) selon l'une des revendications précédentes, le module de pompage auxiliaire (10) pouvant être actionné électriquement.

5. Ensemble (1) selon l'une des revendications précédentes, les composants d'entraînement électriques (3) étant un onduleur et/ou une machine électrique.

6. Ensemble (1) selon l'une des revendications précédentes, comportant :
- un échangeur de chaleur (11) disposé parallèlement au moyen de refroidissement (7) et destiné à transférer de la chaleur entre un agent de régulation de température circulant dans le circuit de régulation de température (4) et de l'air pouvant être introduit dans un habitacle du véhicule hybride (17) et/ou
- une dérivation (12) disposée parallèlement au moyen de refroidissement (7) et
- un module de régulation de débit (13) conçu pour répartir un débit d'agent de régulation de température dans le circuit de régulation de température (4) entre le moyen de refroidissement (7) ainsi que l'échangeur de chaleur (11) et/ou la dérivation (12).

7. Ensemble (1) selon l'une des revendications précédentes, un point d'embranchement (19b) étant disposé en amont du module de régulation de débit (13) afin d'unir des flux partiels d'agent de régulation de température circulant à travers la première section parallèle (8) et la deuxième section parallèle (9).

8. Ensemble (1) selon la revendication 1 ou l'une des revendications 3 à 7, un point d'embranchement (19b) étant disposé en aval du moyen de refroidissement (7) afin d'unir des flux partiels d'agent de régulation de température circulant à travers la première section parallèle (8) et la deuxième section parallèle (9).

9. Ensemble (1) selon l'une des revendications précédentes, comportant :
- un module d'étranglement (14) disposé dans la deuxième section parallèle (9).

10. Ensemble (1) selon l'une des revendications 1 à 8, un effet d'étranglement du module de pompage auxiliaire (10) étant réglable.

11. Ensemble (1) selon l'une des revendications précédentes, comportant :
- une soupape (20) disposée dans la deuxième section parallèle (9) et conçue pour commander un débit du flux partiel d'agent de régulation de température dans la deuxième section parallèle (9).

12. Ensemble (1) selon la revendication 11, la soupape (20) étant conçue comme une soupape régulée en pression, une soupape électromagnétique commandée par une unité de commande de soupape (22) ou une soupape de régulation de débit autorégulatrice.

13. Unité de commande (15) destinée à commander un ensemble (1) selon l'une des revendications précédentes, ladite unité de commande étant conçue et réalisée pour contrôler un état de fonctionnement du moteur à combustion interne (2) et pour délivrer des signaux de commande (16a, 16b) au module de pompage principal (5) et au module de pompage auxiliaire (10) en fonction de l'état de fonctionnement du moteur à combustion interne (2) .

14. Véhicule hybride (17) comprenant un ensemble (1) selon l'une des revendications 1 à 12 et une unité de commande (15) selon la revendication 13.

15. Procédé de régulation de température d'un moteur à combustion interne (2) et de composants d'entraînement électriques (3) d'un véhicule hybride (17) au moyen d'un ensemble (1) selon l'une des revendications 1 à 12, ledit procédé comportant les étapes suivantes :
- contrôler l'état de fonctionnement du moteur à combustion interne (2),
- lorsque le moteur à combustion interne (2) est désembrayé, désactiver le module de pompage principal (5) et activer le module de pompage auxiliaire (10) et
- lorsque le moteur à combustion interne (2) est embrayé, activer le module de pompage principal (5) et désactiver le module de pompage auxiliaire (10).

16. Procédé selon la revendication 15, comportant les étapes suivantes :
- entraîner le module de pompage principal (5) au moyen du moteur à combustion interne (2),
le module de pompage principal (5) étant activé lorsque le moteur à combustion interne (2) est embrayé et désactivé lorsque le moteur à combustion interne (5) est désembrayé.
